# FASCICULE DE BREVET EUROPEEN

(11) **EP 2 140 223 B1**
(45) Date de publication et mention de la délivrance du brevet: **01.09.2010**
(21) Numéro de dépôt: 08787952.4
(22) Date de dépôt: 14.04.2008
(51) Int. Cl.: G01B 5/20, G01B 7/28

(54) **PROCÉDÉ DE PRÉPARATION D'UNE LENTILLE OPHTALMIQUE À L'AFFLEUREMENT D'UN ENTOURAGE D'UNE MONTURE DE LUNETTES**
VERFAHREN FÜR DIE HERSTELLUNG EINES BRILLENGLASES ZUR BÜNDIGEN EINPASSUNG IN EIN BRILLENGESTELL
METHOD FOR PREPARING AN OPHTHALMIC LENS FOR THE FLUSH-FITTING OF A SURROUND OF A SPECTACLE FRAME

(30) Priorité: 24.04.2007 FR 0700694
(43) Date de publication de la demande: 06.01.2010
(73) Titulaire: Essilor International (Compagnie Générale D'Optique), 94220 Charenton le Pont (FR)
(72) Inventeur: DIVO, Fabien, F-94220 Charenton le Pont (FR); JONCOUR, Christian, F-94220 Charenton Le Pont (FR)
(74) Mandataire: Chauvin, Vincent
(86) Numéro de dépôt international: PCT/FR2008/000518
(87) Numéro de publication internationale: WO 2008/142291

(56) Documents cités:
- EP-A1- 0 819 967
- EP-A2- 0 851 265
- EP-A2- 1 092 502
- DE-A1- 19 804 542

## Description

### Domaine technique auquel se rapporte l'invention

La présente invention concerne de manière générale le domaine de la lunetterie et plus précisément l'acquisition de la forme d'un entourage d'une monture de lunettes respectivement cerclée ou semi-cerclée, en vue de l'usinage d'une lentille ophtalmique à monter sur cette monture de lunettes.

Elle concerne plus particulièrement un procédé de préparation d'une lentille ophtalmique en vue de son montage dans un entourage d'une monture de lunettes, cet entourage présentant une forme globalement profilée, avec une face intérieure pourvue d'une première nervure ou rainure d'emboîtement et bordée d'un rebord arrière destiné à être tourné vers le visage du porteur de la monture de lunettes et d'un rebord avant opposé, le procédé comportant une première étape d'acquisition de la géométrie en trois dimensions d'un profil longitudinal acquis courant le long de ladite face intérieure, et une étape de détourage de la lentille ophtalmique avec formation sur son chant d'une seconde nervure ou rainure d'emboîtement s'étendant suivant un profil longitudinal déduit dont la géométrie en trois dimensions est calculée en fonction de la géométrie dudit profil longitudinal acquis.

### ARRIÈRE-PLAN TECHNOLOGIQUE

La partie technique du métier de l'opticien consiste à monter une paire de lentilles ophtalmiques correctrices sur une monture de lunettes sélectionnée par un porteur. Ce montage se décompose en trois opérations principales :
- l'acquisition de la forme d'un entourage de la monture de lunettes,
- le centrage de la lentille qui consiste à positionner et à orienter convenablement cette lentille en regard de l'oeil correspondant du porteur, puis
- l'usinage de la lentille qui consiste à découper ou à détourer son contour à la forme souhaitée, compte tenu de la forme de l'entourage et des paramètres de centrage définis.

L'objectif concret de l'opticien est de détourer la lentille ophtalmique de manière à ce qu'elle puisse mécaniquement s'adapter à la forme de l'entourage de la monture sélectionnée, tout en s'assurant que cette lentille exerce au mieux la fonction optique pour laquelle elle a été conçue.

Dans le cas des montures de lunettes cerclées, l'entourage enveloppe la totalité du pourtour de la lentille et est appelé cercle. Le détourage comporte une opération de biseautage, consistant à réaliser le long du chant de la lentille une nervure d'emboîtement destinée à s'emboîter dans une rainure, communément appelée drageoir, parcourant la face intérieure du cercle de la monture de lunettes.

Dans le cas des montures de lunettes serni-cerclées, l'entourage n'épouse qu'une partie du pourtour de la lentille et est appelé arcade. Le détourage comporte alors une opération de rainage, consistant à réaliser le long du chant de la lentille une rainure d'emboîtement dont une partie est destinée à être engagée une nervure parcourant la face intérieure de l'arcade de la monture de lunettes. Le maintien de la lentille dans cette arcade est alors assuré par un fil relié aux extrémités de cette arcade et inséré dans la partie restante de la rainure d'emboîtement.

Généralement, afin de s'assurer que la nervure d'emboîtement (respectivement rainure d'emboîtement) ne déborde pas en avant ou en arrière du chant de la lentille, l'opticien usine cette lentille de manière que la nervure d'emboîtement (respectivement rainure d'emboîtement) s'étende globalement à mi-largeur de son chant.

On constate toutefois que la paire de lunettes, une fois assemblée, n'est pas toujours esthétique en raison du positionnement des lentilles dans les cercles de la monture imposé par les contraintes techniques précitées, des différences éventuelles d'épaisseurs, voire de cambrures générales, des deux lentilles, et de la différence d'épaisseurs entre le bord de la lentille et le cercle correspondant de la monture. Il en est d'autant plus ainsi qu'il existe une grande variété de formes de montures.

### OBJET DE L'INVENTION

Afin de remédier à l'inconvénient précité de l'état de la technique, la présente invention propose un nouveau procédé de préparation de lentilles permettant d'usiner une lentille ophtalmique de manière que la périphérie de sa face avant s'étende à une distance esthétique du rebord avant ou arrière de l'entourage de la monture de lunettes.

Plus particulièrement, on propose selon l'invention un procédé de préparation tel que défini dans l'introduction, dans lequel il est prévu une seconde étape d'acquisition d'une caractéristique géométrique qui est relative à la position de la première nervure ou rainure d'emboîtement par rapport audit rebord avant et/ou arrière suivant une direction axiale sensiblement perpendiculaire à un plan général de la monture de lunettes, et dans lequel la géométrie du profil longitudinal déduit est également calculée en fonction de ladite caractéristique géométrique.

Par soucis d'esthétisme, on souhaite positionner la lentille ophtalmique dans l'entourage de la monture de lunettes de manière que sa face avant s'étende à une distance connue, préférentiellement constante et nulle, du rebord avant de l'entourage.

Pour cela, en pratique, on acquiert au cours de la deuxième étape d'acquisition de la caractéristique géométrique qui correspond à la distance séparant la première rainure d'emboîtement (respectivement première nervure d'emboîtement) et le rebord avant de l'entourage, puis on usine la lentille au cours de l'étape de détourage de telle sorte que la seconde nervure d'emboîtement (respectivement seconde rainure d'emboîtement) s'étende à une distance de la face avant de la lentille qui est sensiblement égale à ladite caractéristique géométrique.

Selon une première caractéristique avantageuse de l'invention, ladite caractéristique géométrique comporte une distance relative à la position de la première nervure ou rainure d'emboîtement par rapport audit rebord avant et/ou arrière en au moins une section transversale donnée de l'entourage.

De ce fait, au cours de l'étape de détourage, la seconde nervure d'emboîtement (respectivement seconde rainure d'emboîtement) est réalisée de manière à s'étendre à une distance de la face avant de la lentille qui reste sensiblement égale à la distance acquise le long de son contour. Ainsi, une fois la lentille ophtalmique emboîtée dans son entourage, sa face avant affleure alors sensiblement le rebord avant de l'entourage sur l'ensemble de sa périphérie.

En variante, ladite caractéristique géométrique comporte des distances relatives à la position de la première nervure ou rainure d'emboîtement par rapport audit rebord avant et/ou arrière en au moins dix sections transversales données de l'entourage.

Un entourage d'une monture de lunettes présente généralement une section non uniforme sur sa longueur et peut par exemple être légèrement vrillé. La distance séparant la première rainure d'emboîtement (respectivement première nervure d'emboîtement) et le rebord avant de entourage suivant l'axe principal varie donc.

Selon cette variante, on acquiert donc cette distance en une pluralité de section de l'entourage afin de tenir compte de ces variations lors de l'étape de détourage.

Grâce à l'invention, il est en particulier possible d'acquérir cette distance en une multitude de points du contour de l'entourage, pour ensuite détourer la lentille et/ou former sur mesure les faces optiques de la lentille (par usinage ou formation de matière) de telle sorte qu'une fois celle-ci emboîtée dans l'entourage, sa face avant affleure au mieux le rebord avant de l'entourage sur l'ensemble de sa périphérie.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective d'un appareil de lecture de contour selon l'invention, accueillant une monture de lunettes cerclée pourvue de deux cercles ;
- la figure 2 une vue schématique d'un appareil de détourage ;
- la figure 3 est une vue en coupe du palpeur de l'appareil de lecture de contour de la figure 1, palpant le rebord arrière de l'un des cercles ;
- la figure 4 est une vue en coupe du palpeur de l'appareil de lecture de contour de la figure 1, équipé d'un patin d'appui engagé sur l'un desdits cercles.

La présente invention a pour objectif d'améliorer l'esthétisme de l'emboîtement d'une lentille ophtalmique dans un entourage (cercle ou arcade) d'une monture de lunettes cerclée ou semi-cerclée.

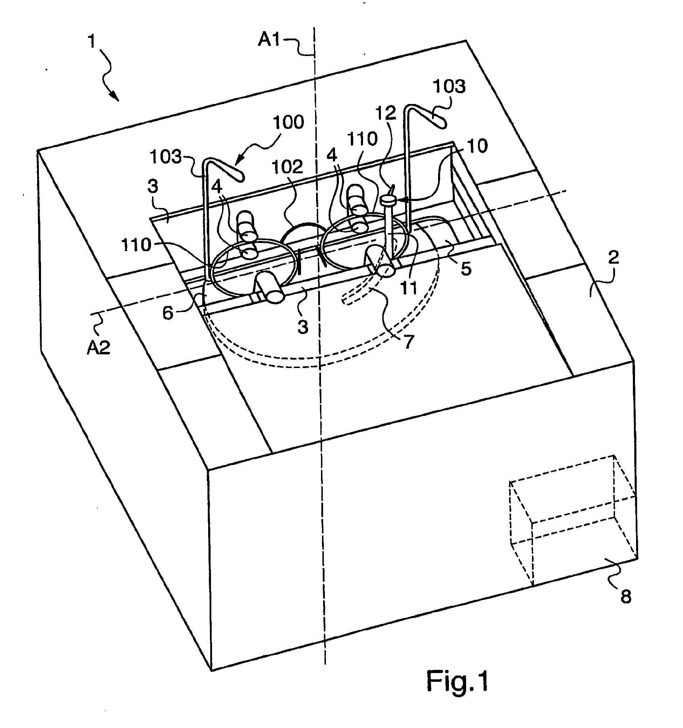

On s'intéressera plus particulièrement dans cet exposé aux montures de lunettes 100 cerclées (figure 1) comportant deux cercles 110 qui sont reliés l'un à l'autre par un pont 102 et qui sont chacun équipés d'une branche 103.

Les cercles 110, également appelés entourages, peuvent présenter des formes diverses (carrées, ovales, allongées...). Il est en effet bien entendu que le terme « cercle » utilisé n'est nullement limitatif quant à la forme de l'élément qu'il désigne. L'expression « monture cerclée » est alors utilisée par opposition à l'expression « monture percée » qui désigne des montures comportant un pont et deux branches mais qui sont dépourvues de cercles.

On peut définir par rapport à cette monture de lunettes 100 cerclée un plan général (non représenté) qui est orthogonal aux deux branches 103 de la monture de lunettes 100 lorsqu'elles sont en position déployée et qui est tangent au pont 102 de cette monture.

Chaque cercle 110 présente une forme globalement profilée, avec une face intérieure 114 bordée de deux rebords 115, 116, dont un rebord arrière 116 tourné du même côté du cercle que les branches 103 et un rebord avant 115 opposé. Le rebord arrière 116 est ainsi destiné à être tourné vers le visage du porteur de la monture de lunettes 100.

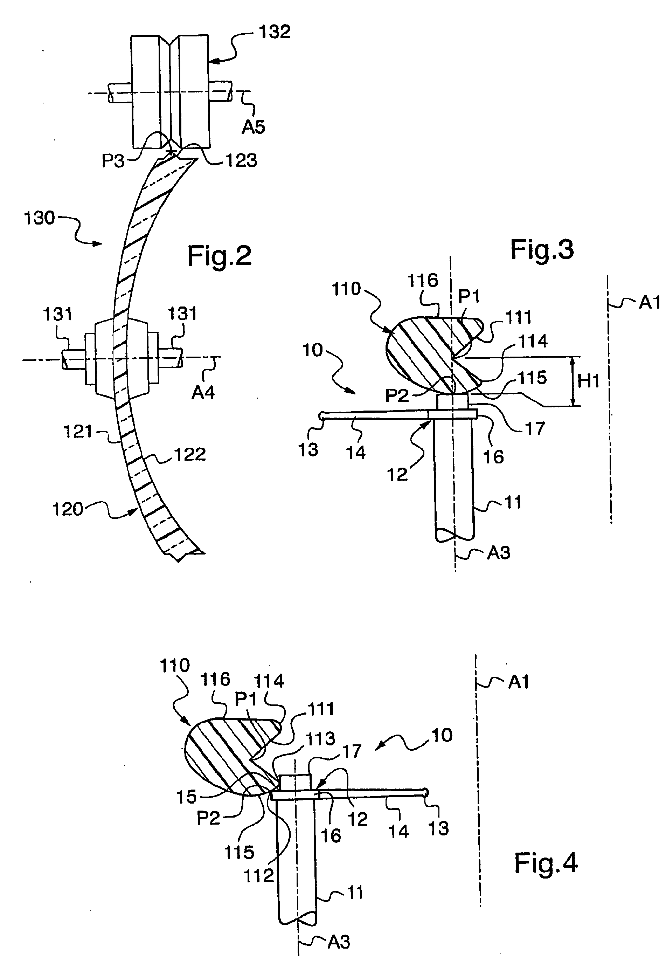

Classiquement, comme le montrent les figures 3 et 4, la face intérieure 114 de chaque cercle 110 est parcourue d'une rainure d'emboîtement, ici en forme de dièdre, communément appelée drageoir 111.

Le drageoir 111 s'étend suivant un profil longitudinal acquis P1 curviligne. Ce profil longitudinal acquis P1 correspond à l'un des brins du drageoir, qui s'étend sur l'un et/ou l'autre des flancs de ce drageoir et qui est sensiblement parallèle ou confondu avec le fond de ce drageoir. Il correspond ici au brin qui court le long du fond du drageoir 111.

Comme le montre la figure 2, la lentille ophtalmique 120 à emboîter dans le cercle 110 correspondant de la monture de lunettes présente une face optique avant 121 convexe et une face optique arrière 122 concave. Telle que représentée sur cette figure, la lentille ophtalmique 120 a déjà été usinée et elle comporte sur son chant une nervure d'emboîtement 123 à emboîter dans le drageoir 111 de ce cercle 110.

Cette nervure d'emboîtement 123 s'étendant ici suivant un profil longitudinal déduit P3 curviligne et présente une section uniforme en V. Le profil longitudinal déduit P3 correspond à une ligne qui court le long de la nervure d'emboîtement, c'est-à-dire à un brin qui s'étend sur l'un et/ou l'autre des flancs de cette nervure d'emboîtement 123 et qui est sensiblement parallèle ou confondu avec le sommet de la nervure d'emboîtement. Il est ici confondu avec le sommet de la nervure d'emboîtement 123.

Comme cela sera exposé plus en détail dans la suite, la géométrie en trois dimensions de ce profil longitudinal déduit P3 (en fonction de laquelle la lentille ophtalmique est usinée) est déduit de la géométrie en trois dimensions du profil longitudinal acquis P1 du drageoir 111 du cercle 100 et d'une caractéristique géométrique H1 (figure 3) qui est relative à la position du drageoir 111 par rapport au rebord avant 115 du cercle 110.

### Dispositif

Pour acquérir la géométrie en trois dimensions du profil longitudinal acquis P1 et ladite caractéristique géométrique H1, on peut utiliser un appareil de lecture de contour 1 tel que par exemple celui représenté sur la figure 1.

Cet appareil comporte un châssis 5 qui est recouvert d'un capot supérieur 2 et qui accueille la monture de lunettes 100.

Le châssis 5 comporte des moyens de maintien de cette monture de lunettes 100, formés ici par deux mâchoires 3 mobiles pourvues de paires de plots 4 aptes à enserrer les cercles 110 de la monture de lunettes 100..

L'appareil de lecture de contour 1 comporte en outre un palpeur 10 muni d'une tige support 11 d'axe longitudinal A3 et d'une tête de lecture 12 adaptée à suivre par contact le profil longitudinal acquis P1 du cercle 110 de la monture de lunettes 100, en tournant autour d'un axe de rotation A1.

Le palpeur 10 comporte à cet effet trois mobilités par rapport au châssis 5.

On décrira ici deux architectures particulières de l'appareil de lecture conférant au palpeur ses différentes mobilités, mais ces architectures ne sont que des exemples de réalisation de l'appareil de lecture parmi d'autres.

Dans l'architecture représentée sur la figure 1, l'appareil de lecture de contour 1 comporte une platine (non visible) qui peut se déplacer en translation sur le châssis 5 selon un axe de transfert A2. Un plateau tournant 6 est monté sur cette platine. Ce plateau tournant 6 est apte à prendre deux positions sur l'axe de transfert A2, en regard de chacun des deux cercles 110 de la monture de lunettes 100.

Le plateau tournant 6 possède un axe de rotation A1 défini comme l'axe normal à la face avant de ce plateau tournant 6 et passant par son centre. Il est adapté à pivoter autour de cet axe par rapport à la platine. Le plateau tournant 6 comporte par ailleurs une lumière 7 oblongue en forme d'arc de cercle au travers de laquelle le palpeur 10 fait saillie.

L'appareil de lecture de contour 1 comporte en outre des moyens d'actionnement pour déplacer la platine suivant l'axe de transfert A2, pour faire tourner le plateau tournant 6 autour de son axe de rotation 1, pour faire glisser la tige support 11 du palpeur 10 le long de la lumière 7, et pour modifier la hauteur de la tête de palpage 12 par rapport au plan du plateau tournant 6.

L'appareil de lecture de contour 1 comporte enfin un dispositif électronique et/ou informatique 8 permettant, d'une part, de piloter les moyens d'actionnement de l'appareil de lecture de contour 1, et, d'autre part, d'acquérir et d'enregistrer les positions successives de la tête de lecture 12 du palpeur 10.

En résumé, les trois mobilités du palpeur 10 consistent, dans cette architecture, en une mobilité radiale R pour que le palpeur 10 puisse se rapprocher ou au contraire s'éloigner de l'axe de rotation A1, en une mobilité orthoradiale TETA de pivotement du palpeur 10 autour de l'axe de rotation A1, et une mobilité axiale Z pour que le palpeur 10 puisse s'élever ou s'abaisser par rapport au plan de la face avant du plateau tournant 6.

Comme le montrent les figures 3 et 4, le palpeur 10 est équipé d'une tête de lecture 12 comportant un doigt de palpage 14. Plus précisément ici, la tête de lecture 12 comporte une couronne 16 qui est montée à l'extrémité de la tige support 11 et qui est surmontée d'un pion 17.

Le doigt de palpage 14 s'étend à partir de la face latérale de cette couronne 16. II se présente sous la forme d'une pointe 14 qui est dirigée perpendiculairement à l'axe longitudinal A3 de la tige support 11 et qui présente un embout 13 sphérique. Cet embout 13 est à insérer au fond du drageoir 111 du cercle 110 et à faire coulisser le long de ce drageoir 111 de manière à relever la forme du profil longitudinal acquis P1 du drageoir 111. En variante, le doigt de palpage pourrait présenter une forme différente, telle qu'une forme de tige cylindrique ou de palette pointant suivant une direction orthogonale à l'axe longitudinal A3 de la tige support 11. Son embout pourrait en variante être monté à rotation sur la pointe, si bien qu'au lieu de glisser sur le cercle, il roulerait sur ce dernier.

La couronne 16 et le pion 17 sont cylindriques de révolution autour de l'axe longitudinal A3 et présentent des diamètres différents. Le pion 17 forme donc un rétrécissement de section par rapport à la couronne 16, et définit ainsi un épaulement 15 sur l'ensemble de la périphérie de la couronne 16.

Selon ce mode de réalisation, l'épaulement 15 forme un patin d'appui 15 en V adapté à être engagé sur ledit cercle 110 pour coulisser le long de ce dernier (figure 4).

Pour ce faire, comme le montre la figure 4 et comme cela sera exposé plus en détail dans la suite, la tête de lecture 12 sera pilotée de telle sorte que le doigt de palpage 14 soit, tout au long du palpage du cercle 110 au moyen du patin d'appui 15, tourné vers l'intérieur, c'est-à-dire vers l'axe de rotation A1.

A cet effet, la tête de lecture 12 pourra par exemple présenter une mobilité de pivotement de manière à pouvoir présenter le patin d'appui 15 en regard du cercle 110, sans que le doigt de palpage 14 ne vienne interférer avec la monture 100. En variante, on pourra prévoir que l'appareil de lecture de contour 1 soit dépourvu de cette mobilité de pivotement. On pourra alors prévoir que la tête de lecture soit amovible et qu'elle puisse être manuellement montée sur la tige support selon deux orientations différentes. On pourra également prévoir deux têtes de lecture interchangeables, dont l'une porte le doigt de palpage tandis que l'autre porte le patin d'appui.

En variante, pour simplifier les algorithmes de pilotage du palpeur 10, on pourra prévoir que le pilotage de la tête de lecture 12 soit réalisé avec le doigt de palpage 14 tourné vers l'extérieur, de façon similaire au pilotage du palpeur lorsqu'il acquiert la géométrie du drageoir 111 au moyen du doigt de palpage 14. Le patin d'appui précité sera alors formé par la face latérale du pion et par la face supérieure du doigt de palpage 14.

Selon un autre mode de réalisation non représenté sur les figures, la tête de lecture du palpeur pourra être dépourvue de patin d'appui.

La seconde architecture de l'appareil de lecture de contour n'est pas représentée sur les figures. Un tel appareil de lecture de contour est par exemple présenté dans le document EP 0 291 378 et dans le document US 4 995 170. Selon cette architecture, le palpeur comporte trois mobilités de translation pour se déplacer dans les trois dimensions de l'espace. Il comporte en particulier des moyens d'actionnement du palpeur pour le déplacer suivant trois directions orthogonales les unes aux autres.

Dans ce mode de réalisation, puisque le palpeur ne pivote pas autour d'un axe de rotation, il est nécessaire qu'il présente une symétrie de révolution pour palper l'ensemble du fond de drageoir. Sa tête de lecture peut à cet effet présenter une forme de disque de faible épaisseur, dont la tranche est adaptée à s'insérer dans le drageoir.

Pour préparer la lentille ophtalmique 120, il est par ailleurs connu d'utiliser un appareil de détourage 130 qui ne fait pas en propre l'objet de la présente invention. Un tel appareil de détourage, bien connu de l'Homme du métier, est par exemple décrit dans le document US 6 327 790 ou commercialisé par la demanderesse sous la marque Kappa CTD.

Comme le montre la figure 2, un tel appareil de détourage 130 comprend généralement des moyens de support ici formés par des arbres 131 de maintien et d'entraînement en rotation de la lentille ophtalmique 120 autour d'un axe de blocage A4. Un tel appareil de détourage comprend en outre des moyens de détourage ici formés par un outil d'usinage 132 monté rotatif autour d'un axe d'usinage A5 qui est ici sensiblement parallèle à l'axe de blocage A4, mais qui pourrait également être incliné par rapport à cet axe.

L'outil d'usinage 132 et/ou les arbres 131 sont pourvus de deux mobilités relatives, dont une mobilité radiale permettant de modifier l'écartement entre l'axe de d'usinage A5 et l'axe de blocage A4, et une mobilité de translation axiale selon un axe parallèle à l'axe de blocage A4.

L'appareil de détourage 130 comporte en outre un dispositif électronique et/ou informatique (non représenté) qui est pourvu, d'une part, de moyens de communication avec le dispositif électronique et/ou informatique 8 de l'appareil de lecture de contour 1, et, d'autre part, de moyens de pilotage des mobilités des arbres 131 et de l'outil d'usinage 132. Ce dispositif électronique et/ou informatique permet en particulier de piloter, pour chaque position angulaire de la lentille 120 autour de l'axe de blocage A4, l'écartement radial entre l'outil d'usinage 132 et l'axe de blocage A4, ainsi que la position axiale de la tranche de la lentille par rapport à la surface de travail de l'outil d'usinage 132.

L'outil d'usinage 132 est en l'espèce constitué par une meule principale de forme, c'est-à-dire par une meule présentant en creux, à la manière d'un négatif, un profil d'usinage complémentaire de la section de la nervure d'emboîtement 123 à obtenir en relief sur la tranche de la lentille à usiner.

### Procédé de préparation

Le procédé de préparation de la lentille ophtalmique sera ici décrit en référence à l'appareil de lecture de contour 1 représenté sur la figure 1.

Ce procédé comporte quatre étapes principales. Il comporte en particulier une première étape d'acquisition de la géométrie du profil longitudinal acquis P1 du drageoir 111, une seconde étape d'acquisition de la caractéristique géométrique H1, une étape de déduction de la géométrie du profil longitudinal déduit P3 de la nervure d'emboîtement 123, et une étape de détourage de la lentille ophtalmique 120 suivant ce profil longitudinal déduit P3.

Au cours de la première étape, la monture de lunettes 10 choisie par le futur porteur est engagée dans l'appareil de lecture 1 (figure 1). Pour cela, la monture 100 est insérée entre les plots 4 des mâchoires 3.

Le palpeur, qui est initialement positionné au centre du plateau tournant 6, en dessous de la monture de lunettes 100, est actionné pour se placer entre deux des plots 4 d'une mâchoire 3, au contact du drageoir 111, de manière à pouvoir palper le cercle 110 correspondant de la monture de lunettes 100.

La conservation du contact du doigt de palpage 14 avec le fond du drageoir 111 est assurée par les moyens d'actionnement qui exercent sur le palpeur 10 un effort de rappel radial dirigé vers le drageoir 111. Cet effort de rappel radial permet ainsi d'éviter que le doigt de palpage 14 ne remonte le long de l'un ou de l'autre des flancs du drageoir 111 et qu'il ne sorte de celui-ci.

Le dispositif électronique et/ou informatique 8 pilote alors les moyens d'actionnement du plateau tournant 6 de sorte que le doigt de palpage 14 du palpeur 10 se déplace continûment le long du fond du drageoir 111, en restant au contact du fond du drageoir 111 grâce audit effort de rappel radial.

Le dispositif électronique et/ou informatique 9 relève pendant la rotation du plateau tournant 6 les coordonnées spatiales d'une pluralité de points du profil longitudinal acquis P1 du drageoir 111, par exemple 360 points, pour mémoriser une image numérique précise de ce profil.

A l'issue de cette étape, le palpeur 10 est commandé pour se replacer en position initiale, au centre du plateau tournant 6, en dessous de la monture de lunettes 100.

Cette première étape d'acquisition de la géométrie tridimensionnelle du profil longitudinal acquis P1 pourrait en variante être réalisée différemment.

Elle pourrait par exemple être réalisée par un palpage optique du drageoir 111. Un tel palpage optique peut être réalisé en acquérant une image numérique tridimensionnelle de la monture de lunettes et en traitant électroniquement cette image numérique de manière à repérer la position du drageoir et à en déduire la géométrie en trois dimensions du profil longitudinal acquis P1.

Cette première étape d'acquisition pourrait également être réalisée au moyen d'un registre de base de données accessible à un ordinateur d'un opticien ou à l'aide d'un registre de base de données partagé, accessible aux ordinateurs d'une pluralité d'opticiens travaillant en des lieux éloignés les uns des autres.

Préférentiellement alors, ce registre de base de données comporte une pluralité d'enregistrements chacun associés à un type de montures de lunettes référencé, c'est-à-dire généralement à un modèle de montures de lunettes. Chaque enregistrement contient une référence de ce type de montures de lunettes et des données de forme relatives à la géométrie d'un fond du drageoir, cette géométrie étant commune à toutes les montures de ce type. En pratique, la référence sera formée par le nom du modèle de la monture de lunettes tandis que les données de formes seront formées par une chaîne de caractères comportant les coordonnées spatiales de 360 points de l'arête de fond du drageoir précité.

Pour acquérir la géométrie du profil longitudinal acquis P1, l'opticien émet alors depuis son ordinateur vers le registre de base de données une requête pour rechercher un enregistrement correspondant, c'est-à-dire pour rechercher un enregistrement dont la référence correspond à la référence de la monture de lunettes 100 choisie par le porteur. Puis, lorsque l'enregistrement est trouvé, le registre renvoie à l'ordinateur de l'opticien les données de forme mémorisées correspondantes, qui correspondent en l'espèce aux 360 points du profil longitudinal acquis P1.

Quelle que soit la méthode d'acquisition du profil longitudinal acquis P1, si, préalablement à la seconde étape, la monture de lunettes 100 n'est pas déjà dans l'appareil de lecture 1, l'opticien l'engage dans les moyens de maintien 3, 4 de cet appareil afin d'acquérir la caractéristique géométrique H1.

L'acquisition de cette caractéristique géométrique H1 peut alors être réalisée de différentes manières.

Dans un premier mode de réalisation, l'acquisition de la caractéristique géométrique H1 est réalisée en palpant une section transversale du drageoir 111 et en acquérant, en cette section transversale, la distance séparant le profil longitudinal acquis P1 du rebord avant 115.

Pour ce faire, dans un premier temps, le dispositif électronique et/ou informatique 8 pilote en combinaison les moyens d'actionnement du plateau tournant 6 et de la tige support 11 de manière que le doigt de palpage 14 du palpeur 10 vienne au contact du fond de drageoir 111 en une section transversale donnée du cercle, c'est-à-dire en un point prédéterminé du profil longitudinal acquis P1. Ce point peut par exemple correspondre au premier point acquis du profil longitudinal acquis P1.

Puis dans un second temps, le dispositif électronique et/ou informatique 8 pilote, d'une part, la mobilité radiale R du palpeur 10 de manière que celui-ci exerce un effort de rappel radial constant permettant à son doigt de palpage 14 de rester au contact du cercle 110, et, d'autre part, la mobilité axiale Z de manière que le doigt de palpage 14 glisse, dans la section donnée du cercle, sur un flanc du drageoir 111 puis sur le rebord avant 115 du cercle 110. Lorsque le palpeur s'échappe du cercle, c'est-à-dire lorsque le doigt de palpage n'est plus au contact du cercle 110, le dispositif électronique et/ou informatique 8 relève l'écart de hauteur entre la position initiale du palpeur (au fond du drageoir 111) et la position actuelle du palpeur (à hauteur du rebord arrière 115 du cercle). Il en déduit la distance H1 séparant le fond du drageoir 111 et le rebord avant 115 du cercle 110. Cette distance H1 forme alors la caractéristique géométrique précitée.

Cette distance H1 sera alors mémorisée, en prévision de la troisième étape, comme la distance séparant le fond du drageoir 111 et le rebord avant 115 en chaque section transversale du cercle 110.

Dans un second mode de réalisation, l'acquisition de la caractéristique géométrique H1 est réalisée en palpant de la manière précitée dix sections transversales distinctes du drageoir 111 et en acquérant, en chacune de ces dix sections transversales, la distance séparant le profil longitudinal acquis P1 du rebord avant 115 du cercle 110.

Les dix sections précitées sont préférentiellement régulièrement réparties le long du cercle 110.

Les dix distances H1 acquises forment alors la caractéristique géométrique précitée.

Préférentiellement alors, le dispositif électronique et/ou informatique 8 réalise, en fonction de ces dix distances H1 acquises, une interpolation permettant d'approximer une distance H1 séparant, en chaque section transversale du cercle 110, le rebord avant 115 et le fond du drageoir 111. Le résultat de cette interpolation est alors mémorisé en prévision de la troisième étape.

Dans un troisième mode de réalisation représenté sur la figure 3, l'acquisition de la caractéristique géométrique H1 est réalisée par glissement du palpeur 10 le long d'une ligne globalement longitudinale P2 du rebord avant 115 du cercle 110.

Avantageusement, cette ligne de palpage globalement longitudinale P2 est choisie au droit de la première rainure ou nervure d'emboîtement 111, ce qui offre l'avantage de palper le rebord avant 115 à proximité de la face intérieure 114 du cercle 110, et donc à proximité de la zone où l'on souhaite que la face avant de la lentille affleure.

En l'espèce, dans un premier temps, le dispositif électronique et/ou informatique 8 pilote en combinaison les moyens d'actionnement du palpeur 10 pour que, au cours d'une première phase, la face d'extrémité du palpeur, c'est-à-dire en l'espèce (mais non limitativement) la face d'extrémité du pion 17, se place en dessous du premier point palpé ou acquis du profil longitudinal acquis P1 (par exemple environ 1 centimètre en dessous) et pour que, au cours d'une seconde phase, la tige support 11 du palpeur 10 vienne au droit de ce premier point. Dans cette position « au droit » du premier point, l'axe longitudinal A3 de la tige support 11 passe par ce premier point.

Puis, dans un second temps, le dispositif électronique et/ou informatique 8 pilote la mobilité axiale Z du palpeur 10 de manière que celui-ci s'élève jusqu'à venir au contact du rebord avant 115 du cercle 110. Cette mobilité axiale Z est ensuite pilotée de manière que le palpeur 10 exerce un effort de rappel axial constant permettant à sa face d'extrémité de rester au contact du cercle 110.

Enfin, dans un troisième temps, le palpeur 10 est piloté en position suivant ses mobilités radiale R et orthoradiale TETA, en fonction de la géométrie du profil longitudinal acquis P1, pour que sa face d'extrémité glisse le long du rebord avant 115 du cercle 100.

Plus précisément, le palpeur 10 est piloté à une vitesse constante autour de l'axe de rotation A1 suivant sa mobilité orthoradiale TETA et est simultanément piloté en position suivant sa mobilité radiale R pour que son axe longitudinal A1 reste au droit du profil longitudinal acquis P1. De cette manière, la face d'extrémité du palpeur 10 glisse le long d'une ligne globalement longitudinale P2 de ce rebord avant 115.

En variante, on pourra réaliser le palpage du rebord avant 115 de la monture au moyen d'une autre partie de la tête de lecture 12 du palpeur 10, par exemple au moyen du doigt de palpage 14.

En variante encore, la mobilité radiale R du palpeur 10 pourra être pilotée pour que la tige support 11 du palpeur reste constamment, non pas au droit du profil longitudinal acquis P1, mais plutôt au droit d'un autre profil longitudinal du drageoir, c'est-à-dire à une distance constante de ce profil longitudinal acquis P1. On pourra en particulier prévoir que la distance de décalage séparant l'axe longitudinal A3 et le profil longitudinal acquis P1 reste, durant le palpage du rebord avant 115, constamment égale à la valeur du rayon de la face d'extrémité du palpeur 10 incrémentée de 1 millimètre. Ainsi, la ligne globalement longitudinale palpée sur le rebord avant 115 du cercle s'étend à proximité de la face intérieure 114 du cercle 110. De cette manière, comme cela sera exposé plus en détail par la suite, la lentille ophtalmique sera usinée de telle sorte qu'une fois emboîtée dans le cercle 110, le contour de sa face avant 121 se situe à hauteur de la ligne du rebord avant 115 qui borde la face intérieure 114 du cercle 110, de manière particulièrement esthétique.

Dans le cas où l'architecture de l'appareil de lecture confère au palpeur trois mobilités de translation, deux premières de ces mobilités de translation permettent au palpeur de se déplacer dans un plan sensiblement parallèle au plan général de la monture et une troisième de ces mobilités permet au palpeur de se déplacer orthogonalement à ce plan. Avec une telle architecture, pour s'assurer que le palpeur glisse le long d'une ligne globalement longitudinale du rebord avant du cercle, on le pilote en position suivant ses deux premières mobilités en fonction de la géométrie dudit profil longitudinal acquis pour qu'il se déplace le long du rebord avant 115 du cercle 110 en restant au droit du fond du drageoir 111, et on le pilote en rappel suivant sa troisième mobilité pour qu'il reste au contact du cercle.

Quoi qu'il en soit, lorsque le palpeur 10 se déplace le long du rebord avant 115 du drageoir, le dispositif électronique et/ou informatique 8 relève l'écart H1 de hauteur entre le fond du drageoir 111 et le rebord avant 115 du cercle. Plus précisément, il relève cet écart au niveau de chacun des 360 points palpés ou acquis du profil longitudinal P1. L'ensemble de ces écarts H1 forme alors la caractéristique géométrique précitée.

En variante, comme le montre la figure 4, le glissement du palpeur 10 le long d'une ligne globalement longitudinale P2 du rebord avant 115 du cercle 110 pourra être réalisé en ne pilotant en position qu'une seule des trois mobilités du palpeur 10, comme expliqué infra.

Dans cette variante, il est tiré parti de la forme particulière du palpeur 10 qui, grâce à son patin d'appui 15, est apte à coulisser le long du cercle 110.

Plus précisément, l'étape d'acquisition de la caractéristique géométrique H1 est réalisée en engageant le patin d'appui 15 sur le cercle 110 de manière que deux zones d'appui 112, 113 de ce patin d'appui 15 vienne respectivement au contact de la face intérieure 114 et du rebord avant 115 du cercle 110.

Puis, le dispositif électronique et/ou informatique 8 pilote conjointement en rappel les mobilités axiale Z et radiale R du palpeur 10 pour que ce dernier exerce sur le cercle 110 un effort de rappel orienté suivant la bissectrice du V du patin d'appui 15, ici à 45 degrés par rapport à l'axe longitudinal A3.

Enfin, la mobilité orthoradiale TETA du palpeur 10 est pilotée à vitesse angulaire constante de manière que le patin d'appui 15 coulisse le long de l'ensemble du cercle 110. Le dispositif électronique et/ou informatique 8 relève alors simultanément la position axiale du palpeur et il en déduit l'écart H1 de hauteur entre le fond du drageoir 111 et le rebord avant 115 du cercle.

Plus précisément, il détermine cet écart H1 au niveau de chacun des 360 points palpés ou acquis du profil longitudinal P1. L'ensemble de ces écarts H1 forme alors la caractéristique géométrique précitée.

Dans un quatrième mode de réalisation, l'acquisition de la caractéristique géométrique H1 est réalisée par palpage optique sans contact du rebord avant 115 du cercle 110.

Un tel palpage optique peut être réalisé en acquérant une image numérique tridimensionnelle de la monture de lunettes 100 et en traitant électroniquement cette image numérique de manière à repérer la position du rebord avant 115 du cercle 110 et à en déduire l'écart H1 de hauteur entre le fond du drageoir 111 et le rebord arrière 115 du cercle au niveau de chacun des 360 points palpés ou acquis du profil longitudinal P1. L'ensemble de ces écarts H1 forme alors la caractéristique géométrique précitée.

Dans un cinquième mode de réalisation, l'acquisition de la caractéristique géométrique H1 est réalisée en recherchant sa valeur dans un registre de base de données prévu à cet effet.

Préférentiellement, ce registre de base de données est du type de celui décrit précédemment. Il comporte une pluralité d'enregistrements contenant chacun une référence d'un type de montures de lunettes et une caractéristique géométrique qui est relative à la position du drageoir 111 par rapport au rebord avant 115 du cercle 110 et qui est propre aux montures de ce type. En pratique, la caractéristique géométrique sera formée par une chaîne de caractères comportant 360 écarts de hauteurs entre le fond du drageoir 111 et le rebord arrière 115 de ces montures.

Pour acquérir la caractéristique géométrique, l'opticien émet alors depuis son ordinateur vers le registre de base de données une requête pour rechercher un enregistrement correspondant, c'est-à-dire pour rechercher un enregistrement dont la référence correspond à la référence de la monture de lunettes 100 choisie par le porteur.

Puis, si un enregistrement correspondant est trouvé, le registre renvoie à l'ordinateur de l'opticien la caractéristique géométrique correspondante.

En revanche, si aucun enregistrement correspondant à la monture de lunettes 100 choisie n'est trouvé, l'opticien acquiert cette caractéristique géométrique au moyen d'une autre méthode puis il écrit, dans un nouvel enregistrement du registre de base de données associé à ladite monture de lunettes 100, la référence de cette monture et la caractéristique géométrique acquise.

En résumé, quel que soit le mode choisi, le dispositif électronique et/ou informatique 8 dispose à ce stade des coordonnées spatiales des 360 points du profil longitudinal acquis P1 et de l'écart H1 de hauteur (mesuré ou approximé) entre le fond du drageoir 111 et le rebord arrière 115 du cercle au niveau de chacun de ces 360 points.

Alors, au cours de la troisième étape, le dispositif électronique et/ou informatique 8 procède au calcul de la géométrie du profil longitudinal déduit P3 en fonction de ces données. L'objectif est que, à l'issue de l'étape de détourage de la lentille suivant ce profil, la lentille ophtalmique 120 puisse être emboîtée dans le cercle 110 de telle sorte que la périphérie de sa face avant 121 affleure le rebord avant 115 du cercle 110.

La géométrie de ce profil longitudinal déduit est ici définie par les cordonnées spatiales de 360 points caractéristiques.

Les coordonnées radiales et angulaires de ces 360 points sont ici calculées en fonction des coordonnées radiales et angulaires des 360 points du profil longitudinal acquis P1.

Elles sont plus précisément calculées de manière que les projections de ces profils longitudinaux acquis P1 et déduit P3 dans le plan général de la monture 100 soient confondues ou soient homothétiques.

Le rapport d'homothétie est calculé en fonction des formes des sections transversales du drageoir 111 et de la gorge de biseautage de l'outil d'usinage 132. Ce rapport d'homothétie permet de tenir compte du fait que, une fois la lentille emboîtée dans le cercle, le sommet de sa nervure d'emboîtement 123 (correspondant au profil longitudinal déduit P3) n'est jamais au contact du fond du drageoir (correspondant au profil longitudinal acquis P1) mais est légèrement décalé par rapport à ce dernier.

Les coordonnées axiales, suivant l'axe de rotation A1, des 360 points du profil longitudinal déduit P3 sont quant à elles calculées en fonction des coordonnées axiales des 360 points du profil longitudinal P1 et des 360 écarts H1 correspondants.

Concrètement, le calcul des coordonnées axiales des 360 points du profil longitudinal déduit P3 est réalisé de sorte que la face avant 121 de la lentille ophtalmique 120 affleure le rebord avant 115 du cercle 110 en un nombre N de sections transversales du cercle 110. On comprend en effet qu'étant données les différences de formes entre le drageoir 111 et le contour de la face avant 121 de la lentille ophtalmique, il n'est pas possible que la face avant 121 de la lentille affleure le rebord avant 115 du cercle sur l'ensemble de son contour.

Ce nombre N est paramétrable par l'utilisateur. On peut prévoir en variante qu'il soit automatiquement calculé de manière à être maximum. On peut encore en variante prévoir qu'il soit calculé de manière que la moyenne des écarts entre le contour de la face avant 121 de la lentille et le rebord avant 115 du cercle soit minimum.

On dit ici que le contour de la face avant 121 de la lentille ophtalmique 120 affleure le rebord avant 115 du cercle 110 en une section transversale donnée du cercle 110 lorsque dans cette section, le bord de la face avant 121 de la lentille et le rebord avant 115 du cercle 110 sont situés au même niveau suivant l'axe de rotation A1 ou sont situés dans le prolongement l'un de l'autre.

Enfin, au cours d'une quatrième et dernière étape, appareil de détourage 130 procède au détourage de la lentille ophtalmique 120.

Les arbres 131 de support de la lentille et/ou l'outil de détourage 132 sont à cet effet pilotés en fonction de la géométrie du profil longitudinal déduit P3, de manière à réaliser sur le chant de la lentille 120 la nervure d'emboîtement 123 suivant ce profil.

Grâce à l'invention, le sommet de la nervure d'emboîtement 123 ainsi obtenue s'étend à une distance de la face avant 121 de la lentille ophtalmique 120 dont les variations sont sensiblement identiques aux variations d'écart H1 entre le rebord avant 115 et le fond du drageoir 111 le long du cercle 110.

On s'assure ainsi qu'une fois emboîtée dans le cercle 110, la face avant 121 de la lentille ophtalmique 120 affleure au mieux le rebord avant 115 du cercle 110.

La présente invention n'est nullement limitée au mode de réalisation décrit et représenté, mais l'homme du métier saura y apporter toute variante conforme à son esprit.

Cette invention trouvera en particulier une application avantageuse lorsqu'elle sera mise en oeuvre par des clients (les opticiens) dits « donneurs d'ordre » qui sous-traitent la fabrication et le détourage des lentilles.

Plus précisément, considérons ici, d'une part, un terminal-client installé du côté d'un client pour la commande de lentilles, et, d'autre part, un terminal-fabricant installé du côté d'un fabricant de lentilles pour la fabrication et le détourage de lentilles.

Le terminal-client comporte des moyens informatiques pour enregistrer et transmettre des données de commande de la lentille ophtalmique 120, par exemple via un protocole de communication par IP (de type Internet). Ces données de commande comportent des données de prescription de correction visuelle (par exemple des données de puissance optique, de centrage...) et des données relatives à la monture.

Le terminal-fabricant comporte quant à lui des moyens informatiques pour recevoir et enregistrer les données de commande transmises par le terminal-client. Il comporte en outre un dispositif de fabrication de la lentille ophtalmique conformément aux données de prescription, comprenant par exemple des moyens de moulage de la lentille et/ou d'usinage de l'une au moins des faces optiques de la lentille.

Il comporte également un appareil de détourage de cette lentille ophtalmique conformément aux données relatives à la monture. Cet appareil de détourage est en particulier conçu pour mettre en oeuvre la quatrième étape du procédé exposé précédemment.

On pourra prévoir en variante que le terminal-fabricant ne soit équipé que de l'appareil de détourage et que les moyens de moulage de la lentille et/ou d'usinage de l'une au moins des faces optiques de la lentille se trouvent chez un fabricant de lentilles brutes.

Quoi qu'il en soit, la mise en oeuvre du procédé de préparation de lentilles sera ici réalisé en quatre phases.

Au cours d'une première phase, le client met en oeuvre les deux premières étapes du procédé précédemment exposé afin d'acquérir des données de forme du profil longitudinal acquis P1 ainsi que ladite caractéristique géométrique H1.

Puis, au cours d'une seconde phase, il émet via le terminal-client des données de commande d'une lentille. Ces données de commande comportent les prescriptions optiques du porteur, lesdites données de forme et ladite caractéristique géométrique.

Au cours d'une troisième phase, le fabricant reçoit ces données de commande. Il peut les recevoir directement du terminal-client, auquel cas il procède au moulage de la lentille et/ou à l'usinage de l'une au moins de ses faces optiques, ou il peut les recevoir du fabricant de lentilles brutes, auquel cas ces données de commande sont accompagnées d'une lentille brute à détourer.

Quoi qu'il en soit, pour calculer la forme des deux faces optiques de la lentille, il est préférable de prendre en compte, outre les données de prescription de correction visuelle, lesdites données de forme et ladite caractéristique géométrique de manière à réaliser une lentille dont la périphérie de la face avant pourra affleurer au mieux le rebord avant de la monture.

Enfin, au cours d'une quatrième phase, le fabricant calcule la forme du profil longitudinal déduit P3 en fonction desdites données de forme et de ladite caractéristique géométrique, suivant une méthode analogue à celle exposée précédemment. Enfin, il détoure la lentille ophtalmique 120 suivant le profil longitudinal déduit P3.

La mise en oeuvre de ce procédé de préparation de lentilles pourra en variante être réalisé différemment, à l'aide d'un registre de base de données accessible au terminal-client et au terminal-fabricant.

Ce registre sera analogue à ceux précédemment exposés. Il comportera une pluralité d'enregistrements chacun associés à un type de montures de lunettes 10 et contenant chacun une référence et une caractéristique géométrique (relative à la position du drageoir par rapport au rebord avant du cercle) propres aux montures du type correspondant. En pratique, la caractéristique géométrique sera formée par une chaîne de caractères comportant 360 écarts de hauteurs entre le fond du drageoir et le rebord arrière de cette monture. De manière préférentielle, chaque enregistrement pourra également comporter les coordonnées spatiales de 360 points d'un profil longitudinal acquis.

Quoi qu'il en soit, au cours d'une première étape, le client détermine une référence de la monture de lunettes 10, qui correspond par exemple au nom du modèle de la monture, puis il émet cette référence vers le terminal-fabricant, via le terminal-client.

Au cours d'une deuxième étape, le fabricant recherche dans ce registre de base de données un enregistrement comportant cette référence. Il lit alors dans cet enregistrement la caractéristique géométrique correspondante. Il lit également les coordonnées spatiales de 360 points du profil longitudinal acquis correspondant, à moins bien sûr que le client lui ait déjà envoyé ces coordonnées.

Il déduit ensuite de ces coordonnées et de cette caractéristique géométrique la géométrie du profil longitudinal déduit selon une méthode du type de celle énoncée précédemment.

Enfin, au cours d'une troisième étape, le fabricant procède au détourage de la lentille ophtalmique suivant ce profil longitudinal déduit.

L'exposé a jusqu'ici fait référence aux montures de lunettes cerclées. Le procédé exposé est également applicable aux montures de lunettes semi-cerclées.

Pour mémoire, ces montures de lunettes comportent des arcades, également connues sous le nom de demi-cercles ou demi-entourages, reliées entre elles par un pont et munies chacune d'une branche. Chaque arcade présente une face intérieure, le long de laquelle court une nervure d'emboîtement, qui est bordée d'un rebord arrière destiné à être tourné vers le visage du porteur de la monture de lunettes et d'un rebord avant opposé.

L'acquisition de la caractéristique géométrique, correspondant à l'écart entre le sommet de la nervure d'emboîtement et le rebord avant de l'arcade, pourra en particulier être réalisé selon chacun des modes de réalisation précédemment exposés.

Le détourage de la lentille sera alors fait à l'aide d'un appareil de détourage comportant un meule de rainage, c'est-à-dire une meule de forme présentant en saillie, à la manière d'un négatif, un profil d'usinage complémentaire de la section de la rainure d'emboîtement à obtenir en relief sur la tranche de la lentille à usiner.

Un tel appareil de détourage, bien connu de l'Homme du métier, est par exemple décrit dans le document FR2874526 ou dans le document EP0176401 ou son équivalent US4640055.

## Revendications

1. Procédé de préparation d'une lentille ophtalmique (120) en vue de son montage dans un entourage (110) d'une monture de lunettes (100), cet entourage (110) présentant une forme globalement profilée, avec une face intérieure (114) pourvue d'une première nervure ou rainure d'emboîtement (111) et bordée d'un rebord arrière (116) destiné à être tourné vers le visage du porteur de la monture de lunettes (100) et d'un rebord avant (115) opposé, le procédé comportant :
- une première étape d'acquisition de la géométrie en trois dimensions d'un profil longitudinal acquis (P1) courant le long de ladite face intérieure (114),
- une étape de détourage de la lentille ophtalmique (120) avec formation sur son chant d'une seconde nervure ou rainure d'emboîtement (123) s'étendant suivant un profil longitudinal déduit (P3) dont la géométrie en trois dimensions est calculée en fonction de la géométrie dudit profil longitudinal acquis (P1),
**caractérisé en ce qu'**il comporte une seconde étape d'acquisition d'une caractéristique géométrique (H1) qui est relative à la position de la première nervure ou rainure d'emboîtement (111) par rapport audit rebord avant (115) et/ou arrière (116) suivant une direction axiale sensiblement perpendiculaire à un plan général de la monture de lunettes (100), et **en ce que** la géométrie du profile longitudinal déduit (P3) est également calculée en fonction de ladite caractéristique géométrique (H1).

2. Procédé de préparation selon la revendication précédente, dans lequel ladite caractéristique géométrique (H1) comporte une distance relative à la position de la première nervure ou rainure d'emboîtement (111) par rapport audit rebord avant (115) et/ou arrière (116) en au moins une section transversale donnée de l'entourage (110).

3. Procédé de préparation selon la revendication 1, dans lequel ladite caractéristique géométrique (H1) comporte des distances relatives à la position de la première nervure ou rainure d'emboîtement (111) par rapport audit rebord avant (115) et/ou arrière (116) en au moins dix sections transversales données de l'entourage (110).

4. Procédé de préparation selon l'une des revendications précédentes, dans lequel la géométrie du profil longitudinal déduit (P3) est calculée pour que, à l'issue de l'étape de détourage, la lentille ophtalmique (120) puisse être emboîtée dans l'entourage (110) de sorte que la périphérie de sa race avant (121) affleure le rebord avant (115) de l'entourage (110).

5. Procédé de préparation selon l'une des revendications précédentes, dans lequel ladite deuxième étape d'acquisition est réalisée par roulement ou glissement d'un palpeur (10) le long d'une ligne globalement longitudinale (P2) du rebord avant (115) ou arrière (116) de l'entourage (110).

6. Procédé de préparation selon la revendication précédente, dans lequel, ledit palpeur (10) comportant trois mobilités (R, TETA, Z) pour se déplacer dans les trois dimensions de l'espace dont une mobilité axiale (Z) pour se déplacer suivant ladite direction axiale, au cours de ladite deuxième étape d'acquisition, on pilote en position les deux autres mobilités (R, TETA) dudit palpeur (10) en fonction de la géométrie dudit profil longitudinal acquis (P1) et on pilote en rappel la mobilité axiale (Z) dudit palpeur (10), indépendamment de la géométrie dudit profil longitudinal acquis (P1), de manière que le palpeur (10) reste au contact du rebord avant (115) ou arrière (116) de l'entourage (110).

7. Procédé de préparation selon la revendication précédente, dans lequel lesdites deux autres mobilités (R, TETA) du palpeur (10) sont pilotées pour que ce palpeur (10) reste, au cours de ladite seconde étape d'acquisition, au droit de la première rainure ou nervure d'emboîtement (111), par exemple au droit du profil longitudinal acquis (P1) suivant ladite direction axiale.

8. Procédé de préparation selon la revendication 5, dans lequel le palpeur (10) étant équipé d'une tête de lecture (12) comportant un patin d'appui (15) en V, ladite deuxième étape d'acquisition est réalisée en engageant ledit patin d'appui (15) sur l'entourage (110), et en le faisant coulisser le long de ce dernier de manière que deux zones d'appui (112, 113) de ce patin d'appui (15) glissent respectivement sur la face intérieure (114) et sur le rebord avant (115) ou arrière (116) de l'entourage (110).

9. Procédé de préparation selon l'une des revendications 1 à 4, dans lequel ladite deuxième étape d'acquisition est réalisée par palpage optique du rebord avant (115) ou arrière (116) de l'entourage (110).

10. Procédé de préparation selon l'une des revendications 1 à 4, dans lequel ladite deuxième étape d'acquisition est réalisée en cherchant, dans un registre de base de données dont chaque enregistrement est associé à un type de montures de lunettes référencé et contient une caractéristique géométrique propre à ce type de montures de lunettes et relative à la position de la nervure ou rainure d'emboîtement par rapport au rebord avant et/ou arrière de l'entourage, un enregistrement correspondant à ladite monture de lunettes (100) et en lisant ladite caractéristique géométrique (H1) associée.

11. Procédé de préparation selon la revendication précédente, dans lequel, si aucun enregistrement correspondant à ladite monture de lunettes (100) n'est trouvé, on acquiert ladite caractéristique géométrique (H1) par roulement ou glissement d'un palpeur (10) le long du rebord avant (115) et/ou arrière (116) dudit entourage (110) et on écrit, dans un nouvel enregistrement du registre de base de données associé à ladite monture de lunettes (100), ladite caractéristique géométrique (H1) acquise.

12. Procédé de préparation selon l'une des revendications précédentes, dans lequel, l'étape de première acquisition est réalisée par palpage mécanique le long de ladite première nervure ou rainure d'emboîtement (111) ou par palpage optique de cette première nervure ou rainure d'emboîtement (111).

13. Procédé de préparation selon l'une des revendications 1 à 11, dans lequel l'étape de première acquisition est réalisée en lisant un enregistrement d'un registre de base de données dont chaque enregistrement est associé à un type de montures de lunettes référencé et contient la géométrie en trois dimensions d'un profil longitudinal acquis propre à ce type de montures de lunettes référencé.

14. Procédé selon l'une des revendications précédentes, mis en oeuvre au moyen d'un système comprenant, d'une part, un terminal-client installé du côté d'un client et comportant des moyens informatiques pour enregistrer et transmettre des données de commande de la lentille ophtalmique (120), ces données de commande comportant des données relatives à ladite monture de lunettes (100), et, d'autre part, un terminal-fabricant installé du côté d'un fabricant, qui comporte des moyens informatiques pour recevoir et enregistrer les données de commande transmises par le terminal-client et un dispositif de détourage de ladite lentille ophtalmique (120) conçu pour mettre en oeuvre ladite étape de détourage, ladite deuxième étape d'acquisition comportant :
- une étape de détermination, par le client, de ladite caractéristique géométrique (H1), et
- une étape d'émission par le terminal-client, des données de commande, ces données intégrant ladite caractéristique géométrique (H1), et
- une étape de réception par le terminal-fabricant d'une partie au moins desdites données de commande, cette partie intégrant ladite caractéristique géométrique (H1).

15. Procédé selon l'une des revendications 1 à 13, mis en oeuvre au moyen d'un système comprenant, d'une part, un terminal-client installé du côté d'un client et comportant des moyens informatiques pour enregistrer et transmettre des données de commande de la lentille ophtalmique (120), ces données de commande comportant des données relatives à ladite monture de lunettes (100), et, d'autre part, un terminal-fabricant installé du côté d'un fabricant, qui comporte des moyens informatiques pour recevoir et enregistrer les données de commande transmises par le terminal-client et un dispositif de détourage de ladite lentille ophtalmique (120) conçu pour mettre en oeuvre ladite étape de détourage, ladite deuxième étape d'acquisition comportant :
- une étape de lecture, par le client, d'une référence de ladite monture de lunettes (100),
- une étape d'émission par le terminal-client des données de commande, ces données intégrant ladite référence,
- une étape de réception par le terminal-fabricant desdites données de commande, et
- une étape de recherche par le terminal-fabricant, dans un registre de base de données dont chaque enregistrement est associé à un type de montures de lunettes référencé et contient une référence de ce type de montures de lunettes et une caractéristique géométrique relative à la position de la nervure ou rainure d'emboîtement par rapport au rebord avant et/ou arrière de l'entourage propre à ce type de monture de lunettes, d'un enregistrement associé à la référence lue de ladite monture de lunettes (100).

## Claims

1. A method of preparing an ophthalmic lens (120) for mounting in a surround (110) of an eyeglass frame (100), the surround (110) presenting a generally profiled shape with an inside face (114) provided with a first engagement ridge or groove (111) and lying between a rear margin (116) for being turned towards the face of the wearer of the eyeglass frame (100) and an opposite front margin (115), the method comprising:
- a first acquisition step of acquiring the three-dimensional shape of an acquired longitudinal profile (P1) running along said inside face (114); and
- a step of shaping the ophthalmic lens (120) so as to form on its edge face a second engagement ridge or groove (123) extending along a deduced longitudinal profile (P3) of three-dimensional shape that is calculated as a function of the shape of said acquired longitudinal profile (P1);
the method being **characterized in that** it includes a second acquisition step of acquiring a geometrical characteristic (H1) relating to the position of the first engagement ridge or groove (111) relative to said front and/or rear margin (115 and/or 116) in an axial direction substantially perpendicular to a general plane of the eyeglass frame (100), and **in that** the shape of the deduced longitudinal profile (P3) is also calculated as a function of said geometrical characteristic (H1).

2. A method of preparation according to the preceding claim, wherein said geometrical characteristic (H1) comprises a distance relating to the position of the first engagement ridge or groove (111) relative to said front and/or rear margin (115 and/or 116) at at least one given cross-section of the surround (110).

3. A method of preparation according to claim 1, wherein said geometrical characteristic (H1) comprises distances relating to the position of the first engagement ridge or groove (111) relative to said front and/or rear margin (115 and/or 116) at at least ten given cross-sections of the surround (110).

4. A method of preparation according to any preceding claim, wherein the shape of the deduced longitudinal profile (P3) is calculated so that at the end of the shaping step, the ophthalmic lens (120) can be engaged in the surround (110) in such a manner that the periphery of its front face (121) is flush with the front margin (115) of the surround (110).

5. A method of preparation according to any preceding claim, wherein said second acquisition step is performed by rolling or sliding a feeler (10) along a generally longitudinal line (P2) of the front or rear margin (115 or 116) of the surround (110).

6. A method of preparation according to the preceding claim, wherein said feeler (10) has three degrees of freedom in movement (R, THETA, Z) for moving in the three dimensions of space, including freedom to move axially (Z) along said axial direction during said second acquisition step, and wherein during said second acquisition step, the positions of the other two freedoms of movement (R, THETA) of said feeler (10) are controlled as a function of the shape of said acquired longitudinal profile (P1), and the axial freedom of movement (Z) of said feeler (10) is controlled independently of the shape of said acquired longitudinal profile (P1) to act in a return direction so that the feeler (10) remains in contact with the front or rear margin (115 or 116) of the surround (110).

7. A method of preparation according to the preceding claim, wherein said other two freedoms of movement (R, THETA) of the feeler (10) are controlled so that during said second acquisition step the feeler (10) remains in register with the first engagement ridge or groove (111), e.g. in register with the acquired longitudinal profile (P1) in said axial direction.

8. A method of preparation according to claim 5, wherein the feeler (10) is fitted with a read head (12) including a V-shaped bearing shoe (15), and said second acquisition step is performed by engaging said bearing shoe (15) against the surround (110), and by allowing it to slide therealong in such a manner that two bearing zones (112, 113) of the bearing shoe (15) slide respectively over the front or rear margin (115 or 116) and against the inside face (114) of the surround (110).

9. A method of preparation according to any one of claims 1 to 4, wherein said second acquisition step is performed by optically feeling the front or rear margin (115 or 116) of the surround (110).

10. A method of preparation according to any one of claims 1 to 4, wherein said second acquisition step is performed by searching, in a database registry in which each record is associated with a reference eyeglass frame type and contains a geometrical characteristic specific to said eyeglass frame type and relating to the position of the engagement ridge or groove relative to the front and/or rear margin of the surround, for a record corresponding to said eyeglass frame (100), and in reading said associated geometrical characteristic (H1).

11. A method of preparation according to the preceding claim, wherein, if no record corresponding to said eyeglass frame (100) is found, said geometrical characteristic (H1) is acquired by rolling or sliding a feeler (10) along the front and/or rear margin (115 or 116) of said surround (110) and by writing said acquired geometrical characteristic (H1) in a new record of the database registry in association with said eyeglass frame (100).

12. A method of preparation according to any preceding claim, wherein the first acquisition step is performed by mechanically feeling along said first engagement ridge or groove (111) or by optically feeling along said first engagement ridge or groove (111).

13. A method of preparation according to any one of claims 1 to 11, wherein the first acquisition step is performed by reading a record in a database registry in which each record is associated with a reference eyeglass frame type and contains the three-dimensional shape of an acquired longitudinal profile specific to said reference eyeglass frame type.

14. A method of preparation according to any preceding claim, implemented by means of a system comprising firstly a client terminal installed beside a client and including computer means for computing and transmitting order data concerning an ophthalmic lens (120), said order data comprising data relating to said eyeglass frame (100), and secondly a manufacturer terminal installed beside a manufacturer and including computer means for receiving and recording the order data transmitted by the client terminal, and a shaper device for shaping said ophthalmic lens (120) and designed to implement said shaping step, said second acquisition step comprising:
- a step of the client determining said geometrical characteristic (H1); and
- a step of the client terminal sending control data, said data incorporating said geometrical characteristic (H1); and
- a step of the manufacturer terminal receiving at least part of said control data, said part incorporating said geometrical characteristic (H1).

15. A method according to any one of claims 1 to 13, implemented by means of a system comprising firstly a client terminal installed beside a client and including computer means for computing and transmitting order data concerning an ophthalmic lens (120), said order data comprising data relating to said eyeglass frame (100), and secondly a manufacturer terminal installed beside a manufacturer and including computer means for receiving and recording the order data transmitted by the client terminal, and a shaper device for shaping said ophthalmic lens (120) and designed to implement said shaping step, said second acquisition step comprising:
- a step of the client reading a reference for said eyeglass frame (100);
- a step of the client terminal sending order data, the order data incorporating said reference;
- a step of the manufacturer terminal receiving said order data; and
- a step of the manufacturer terminal searching in a database registry in which each record is associated with a reference eyeglass frame type and contains a reference of said eyeglass frame type and a geometrical characteristic relating to the position of the engagement ridge or groove relative to the front and/or rear margin of the surround specific to said eyeglass frame type, for a record associated with the reference read for said eyeglass frame (100).

## Patentansprüche

1. Vorbereitungsverfahren für ein Brillenglas (120) in Hinblick auf seine Montage in einen Rahmen (110) einer Brillenfassung (100), wobei dieser Rahmen (110) eine im Wesentlichen profilierte Form aufweist, mit einer Innenseite (114), die mit einer ersten Einsetzrille bzw. - nut (111) versehen ist und von einem hinteren Rand (116) begrenzt ist, der zum Gesicht des Brillenträgers (100) gerichtet ist sowie einem gegenüberliegenden vorderen Rand (115), wobei das Verfahren umfasst:
- einen ersten Erfassungsschritt der Geometrie in drei Dimensionen eines erfassten Längsprofils (P1), das entlang der Innenseite (114) verläuft,
- einen Zuschneideschritt des Brillenglases (120) mit Bildung an dessen Kante einer zweiten Einsetzrille bzw. -nut (123), die sich entlang eines abgeleiteten Längsprofils (P3) erstreckt, dessen Geometrie in drei Dimensionen in Abhängigkeit der Geometrie des erfassten Längsprofils (P1) berechnet wird,
**dadurch gekennzeichnet, dass** es einen zweiten Erfassungsschritt eines geometrischen Merkmals (H1) umfasst, das sich auf die Position der ersten Einsetzrille bzw. -nut (111) in Bezug auf den vorderen Rand (115) und/oder hinteren Rand (116) entlang einer im Wesentlichen zu einer allgemeinen Ebene der Brillenfassung (100) senkrechten axialen Richtung bezieht, und **dadurch**, dass die Geometrie des abgeleiteten Längsprofils (P3) ebenfalls in Abhängigkeit dieses geometrischen Merkmals (H1) berechnet wird.

2. Vorbereitungsverfahren nach vorausgehendem Anspruch, bei dem das geometrische Merkmal (H1) eine zur Position der ersten Einsetzrille bzw. -nut (111) relative Distanz in Bezug zum vorderen Rand (115) und/oder hinteren Rand (116) in mindestens einem vorgegebenen Querschnitt des Rahmens (110) umfasst.

3. Vorbereitungsverfahren nach Anspruch 1, bei dem das geometrische Merkmal (H1) relative Distanzen zur Position der ersten Einsetzrille bzw. -nut (111) in Bezug auf den vorderen Rand (115) und/oder hinteren Rand (116) in mindestens zehn vorgegebenen Querschnitten des Rahmens (110) umfasst.

4. Vorbereitungsverfahren nach einem der vorausgehenden Ansprüche, bei dem die Geometrie des abgeleiteten Längsprofils (P3) berechnet wird, damit das Brillenglas (120) am Ende des Zuschneideschrittes derart in den Rahmen (110) eingesetzt werden kann, dass die Peripherie seiner Vorderseite (121) bündig mit dem vorderen Rand (115) des Rahmens (110) abschließt.

5. Vorbereitungsverfahren nach einem der vorausgehenden Ansprüche, bei dem der zweite Erfassungsschritt durch Rollen oder Gleiten eines Abtasters (10) entlang einer im Allgemeinen longitudinalen Linie (P2) des vorderen Randes (115) oder hinteren Randes (116) des Rahmens (110) realisiert wird.

6. Vorbereitungsverfahren nach vorausgehendem Anspruch, bei dem der Abtaster (10) drei Bewegungsmöglichkeiten (R, TETA, Z) hat, um sich in den drei räumlichen Dimensionen zu bewegen, mit einer axialen Mobilität (Z), um sich entlang der axialen Richtung zu bewegen, während man während dem zweiten Erfassungsschritt die beiden anderen Mobilitäten (R, TETA) des Abtasters (10) in Abhängigkeit der Geometrie des erfassten Längsprofils (P1) steuert und man die axiale Mobilität (Z) des Abtasters (10) unabhängig von der Geometrie des erfassten Längsprofils (P1) derart mit einer Rückstellkraft steuert, dass der Abtaster (10) mit dem vorderen Rand (115) oder dem hinteren Rand (116) des Rahmens (110) in Kontakt bleibt.

7. Vorbereitungsverfahren nach vorausgehendem Anspruch, bei dem die beiden anderen Mobilitäten (R, TETA) des Abtasters (10) so gesteuert werden, dass dieser Abtaster (10) während dem zweiten Erfassungsschritt entlang der ersten Einsetzrille bzw. -nut (111) bleibt, z. B. entlang des erfassten Längsprofils (P1) gemäß der axialen Richtung.

8. Vorbereitungsverfahren nach Anspruch 5, bei dem der Abtaster (10) mit einem eine V-förmige Fußplatte (15) umfassenden Lesekopf (12) ausgestattet ist, wobei der zweite Erfassungsschritt durch Einrücken dieser Fußplatte (15) in den Rahmen (110) und durch deren derartigem Gleiten entlang des Rahmens realisiert wird, dass jeweils zwei Auflageflächen (112,113) dieser Fußplatte (15) auf der Innenseite (114) und auf dem vorderen Rand (115) oder hinteren Rand (116) des Rahmens (110) gleiten.

9. Vorbereitungsverfahren nach einem der Ansprüche 1 bis 4, bei dem der zweite Erfassungsschritt durch optisches Abtasten des vorderen Randes (115) oder hinteren Randes (116) des Rahmens (110) realisiert wird.

10. Vorbereitungsverfahren nach einem der Ansprüche 1 bis 4, bei dem der zweite Erfassungsschritt durch Suchen einer der Brillenfassung (100) entsprechenden Speicherung und Ablesen des assoziierten geometrischen Merkmals (H1) in einem Register einer Datenbank realisiert wird, in der jede Speicherung mit einem referenzierten Typ von Brillenfassung assoziiert ist und ein diesem Typ von Brillenfassung eigenes geometrisches Merkmal umfasst, das sich auf die Position der Einsetzrille oder -nut in Bezug auf den vorderen Rand und/oder hinteren Rand des Rahmens bezieht.

11. Vorbereitungsverfahren nach vorausgehendem Anspruch, bei dem man, wenn keine der Brillenfassung (100) entsprechende Speicherung gefunden wird, das geometrische Merkmal (H1) durch Rollen oder Gleiten eines Abtasters (10) entlang des vorderen Randes (115) und/oder hinteren Randes (116) des Rahmens (110) erfasst, und man das so erfasste geometrische Merkmal (H1) in eine neue Speicherung des der Brillenfassung (100) assoziierten Datenbankregisters einträgt.

12. Vorbereitungsverfahren nach einem der vorausgehenden Ansprüche, bei dem der erste Erfassungsschritt durch mechanisches Abtasten entlang der ersten Einsetzrille bzw. -nut (111) oder durch optisches Abtasten dieser ersten Einsetzrille bzw. -nut realisiert wird.

13. Vorbereitungsverfahren nach einem der Ansprüche 1 bis 11, bei dem der erste Erfassungsschritt durch Ablesen einer Speicherung in einem Datenbankregister realisiert wird, wobei jede Speicherung mit einem referenzierten Typ von Brillenfassung assoziiert ist und in drei Dimensionen die Geometrie eines diesem referenzierten Typ von Brillenfassung eigenen erfassten Längsprofils enthält.

14. Verfahren nach einem der vorausgehenden Ansprüche, das mithilfe eines Systems angewendet wird, welches zum einen einen seitens eines Kunden installierten Kundenterminal und Datenverarbeitungsmittel zum Speichern und Übertragen der Bestelldaten des Brillenglases (120) umfasst, wobei diese Bestelldaten zur Brillenfassung (100) relative Daten umfassen, sowie zum anderen einen seitens eines Herstellers installierten Herstellerterminal umfasst, der Datenverarbeitungsmittel umfasst, um die vom Kundenterminal übertragenen Bestelldaten zu empfangen und zu speichern, sowie eine Zuschneidevorrichtung für das Brillenglas (120), die so ausgelegt ist, dass sie den Zuschneideschritt ausführen kann, wobei dieser zweite Erfassungsschritt umfasst:
- einen Ermittlungsschritt des geometrischen Merkmals (H1) durch den Kunden, und
- einen Ausgabeschritt der Bestelldaten durch den Kundenterminal, wobei diese Daten das geometrische Merkmal (H1) einschließen, und
- einen Aufnahmeschritt durch den Herstellerterminal von mindestens einem Teil der Bestelldaten, wobei dieser Teil das geometrische Merkmal (H1) einschließt.

15. Verfahren nach einem der Ansprüche 1 bis 13, das mittels einem System umgesetzt wird, das zum einen einen seitens eines Kunden installierten Kundenterminal und Datenverarbeitungsmittel zum Speichern und Übertragen der Bestelldaten des Brillenglases (120) umfasst, wobei diese Bestelldaten zur Brillenfassung (100) relative Daten umfassen, sowie zum anderen einen seitens eines Herstellers installierten Herstellerterminal umfasst, der Datenverarbeitungsmittel umfasst, um die vom Kundenterminal übertragenen Bestelldaten zu empfangen und zu speichern, sowie eine Zuschneidevorrichtung für das Brillenglas (120), die so ausgelegt ist, dass sie den Zuschneideschritt ausführen kann, wobei dieser zweite Erfassungsschritt umfasst:
- einen Ableseschritt einer Referenz der Brillenfassung (100) durch den Kunden,
- einen Ausgabeschritt der Bestelldaten durch den Kundenterminal, wobei diese Daten diese Referenz einschließen,
- einen Aufnahmeschritt dieser Bestelldaten durch den Herstellerterminal, und
- einen Suchschritt nach einer mit einer abgelesenen Referenz der Brillenfassung (100) assoziierten Speicherung in einem Datenbankregister durch den Herstellerterminal, wobei jede Speicherung mit einem referenzierten Typ von Brillenfassung assoziiert ist und eine diesem Typ von Brillenfassung zugeordnete Referenz sowie ein eigenes geometrisches Merkmal umfasst, das sich auf die Position der Einsetzrille oder -nut in Bezug auf den vorderen Rand und/oder hinteren Rand des Rahmens bezieht.
